(19)

Europäisches
Patentamt
European
Patent Office
Office européen
des brevets

(11) **EP 2 433 902 A1**

(12) **EUROPEAN PATENT APPLICATION**
published in accordance with Art. 153(4) EPC

(43) Date of publication:
    **28.03.2012 Bulletin 2012/13**

(21) Application number: **10777257.6**

(22) Date of filing: **18.05.2010**

(51) Int Cl.:
    **C01B 3/02** (2006.01)    **C01B 13/02** (2006.01)

(86) International application number:
    **PCT/BY2010/000004**

(87) International publication number:
    **WO 2010/132973 (25.11.2010 Gazette 2010/47)**

(84) Designated Contracting States:
    **AL AT BE BG CH CY CZ DE DK EE ES FI FR GB
    GR HR HU IE IS IT LI LT LU LV MC MK MT NL NO
    PL PT RO SE SI SK SM TR**

(30) Priority: **19.05.2009 EA 200900948**

(71) Applicant: **Energy Innovation Company B.V.
    2201 AN  Noordwijk (NL)**

(72) Inventor: **PARTNOU, Yauheni Viktorovich
    Minsk 220131 (BY)**

(74) Representative: **Office Freylinger
    P.O. Box 48
    8001 Strassen (LU)**

(54)    **METHOD AND DEVICE FOR PRODUCING COMBUSTIBLE GAS, HEAT ENERGY, HYDROGEN AND OXYGEN**

(57)    The invention relates to power production, in particular to physicochemical methods for production of heat energy, and is applicable in a variety of industries, agriculture, transport, etc. The invention makes it possible to reduce the amount of energy consumed for breaking water molecules in an electric field, optimize the processes for producing combustible gas, heat energy, hydrogen and oxygen, and increase the efficiency factor of the technical process for electrolytic decomposition of water.

A method comprises first subjecting water in the liquid phase to a pulsed electric current discharge in a capacitor/reactor $C_1$ of a parametric electromagnetic field oscillator at parametric resonance stability frequencies that are multiples of the basic vibrational transition of hydrogen molecules to provide formation of free water molecules in the gas-vapor phase. The resultant gas-vapor mixture is subjected to a pulsed electric current discharge in a capacitor/reactor $C_2$ of a second parametric electromagnetic field oscillator, electrically connected to the first parametric electromagnetic field oscillator, at parametric resonance stability frequencies that are multiples of the basic vibrational transition of hydrogen molecules contained in the gas-vapor phase to produce a final product.

A device comprises a capacitor/reactor $C_1$ and a capacitor/reactor $C_2$ of a parametric electromagnetic field oscillator 12 for treating water in the liquid and gas-vapor phase, respectively, adapted to form two connected oscillating electrical circuits, which are electrically connected to an energy storage 21 and a master oscillator of a pump unit 22.

Figure 3

**EP 2 433 902 A1**

## Description

The invention relates to power production, in particular to physicochemical methods for producing heat energy, and is applicable in a variety of industries, agriculture, transport, etc.

There are numerous methods and devices for water decomposition, which produce hydrogen and oxygen with further use of hydrogen as an energy source [1, 2]. For example, in the method described in [1] water and oxygen are obtained from superheated water vapor with a temperature of 1800-2500˚C. Patent application [2] discloses the production of hydrogen and oxygen from water vapor on a catalyst by passing the vapor through an electric field. Both methods are quite energy intensive and difficult to implement.

A method for producing a combustible gas mixture of hydrogen, oxygen and other water-dissolved gases comprises separating water by pulsating and continuous electric current [3]. The method involves treating water included as a dielectric between plates of a capacitor connected in series with a resonant choke circuit. The capacitor is subjected to a pulsating, unipolar voltage in which the polarity does not pass beyond an arbitrary ground, whereby the water molecules within the capacitor are subjected to the electric field of similar polarity and elongated by electrical polar forces. The pulse frequency at the capacitor is chosen corresponding to the natural frequency of the water molecule resonance in the liquid phase. Long-term exposure to pulses in the resonance mode brings about an increase in the level of the vibrational energy of molecules with each pulse. The combination of pulsating and continuous electric fields leads to the fact that at some instant the electrical bonding strength in the molecule is so weakened that the strength of the external electric field exceeds the bonding energy, and atoms of oxygen and hydrogen release as separate gases. Then the resultant ready-to-use mixture of oxygen, hydrogen and other gases dissolved in water is collected as fuel.

A disadvantage of this method is that the electrolysis process is unstable and substantially dependent on the electrode material and purity of the source water, which is preferably pre-distilled. Another disadvantage of the method is the need to use the combined exposure to continuous and pulsating electric fields, which complicates the process.

A method, which is most closely related to the present invention, involves decomposition of superheated water vapor into hydrogen and oxygen in an electric field [4]. The method includes producing, in an unclosed space, superheated vapor with a temperature of 500 - 550˚C, which is then passed through a constant high-voltage electric field (6000 V), thereby causing dissociation of water molecules in the vapor state and breaking them down into free atoms of hydrogen and oxygen.

A disadvantage of this method is the low percentage yield of hydrogen, since the process is carried out without taking into account the energy state of water molecules in the gas-vapor phase. Another disadvantage is the need to use a quite high electric field voltage to ensure dissociation of water molecules, this imparing the safety of implementation of the method in general.

A number of devices are known for decomposition of water in an electric field to obtain hydrogen and oxygen [5, 6, 7]. Document [5] teaches a plasma torch comprising a housing with a discharge chamber and a fluid reservoir connected to the housing. The reservoir is filled with a moisture absorbing material. A nozzle/anode and a cathode are coaxially mounted in the discharge chamber and secured in a cathode holder. The cathode holder is adapted to axially move in the insulating tube, which is installed in a heat conductive evaporator tube with a developed outer surface. The cathode holder, insulating tube and evaporator tube pass through the reservoir, the evaporator tube contacting, on the reservoir side, with the moisture-absorbing material, and on the body side, with a ring of a heat conductive material. The heat conductive material has channels extending into the discharge chamber and contacting the nozzle/anode. An element, resiliently deformable in the radial direction, is coaxially mounted between the cathode holder and the insulating tube and connected to the cathode holder near the cathode and brought into contact with the insulating tube.

A welding device according to [6] uses a plasma-forming water vapor gas. The device consists of a plasma torch comprising a cathode, a nozzle/anode with channels for a plasma-forming medium, a reservoir with a moisture-absorbing material, a pilot arc power source, a straight arc power supply and a pilot arc current controller. The torch comprises an insulating sealing lid, and the moisture-absorbing material may be kaolin wool, carbon fiber or carbon cloth. During operation of the torch, heat energy released by the pilot arc at the nozzle/anode evaporates water present in the reservoir, and the resultant water vapor enters the discharge chamber through the nozzle/anode channels and then exits through its central hole, pulling out an electric arc column. Due to the reduction in the nozzle/anode hole of the electric arc column, water vapor is heated to high temperatures and transits to the plasma state, forming a plasma jet at the nozzle/anode outlet. A disadvantage of these devices is the low efficiency of usage of the electric field energy for decomposition of water into hydrogen and oxygen.

Most closely related to the present invention is a water-filled pistol-shaped plasma torch [7]. The torch comprises an inner metallic rod electrode with a detachable copper tip, at the end face of which a refractory insert made of zirconium or hafnium rod is axially mounted flush with the tip. A dielectric tube is arranged coaxially to the electrode, and a gap is provided between the insert and the tube. A porous copper filter is mounted on the tube. The torch body has a central (axial) channel and consists of two parts. The body cavity is filled with a moisture-absorbing heat-resistant cloth that forms the inner wool layer outside of a layer of heat resistant cloth. A plug closing the hole for pouring water into the cavity with the moisture-absorbing heat-resistant cloth is fixed on the body. Tightness of the body is provided by gaskets. A spring-loaded button is provided at the side of the idle end of the electrode. Operating voltage is applied over conducting leads. Spiral tangential grooves are provided on the front face of the conical surface of the porous copper filter. The outer surface of the conical end of the filter is at an angle of 5-15˚ to the inner surface of the nozzle. The length of the central channel is equal to its diameter, and the diameter of the insert is 0.3-0.5 the diameter of the tip. After preparing the device and filling it with water, which soaks the wool and heat-resistant cloth, the power source is switched on to supply voltage (negative potential) to the internal metal rod electrode (cathode), while positive potential is applied to the torch body contacting the nozzle (anode). Then, using the spring-loaded button the refractory insert with zirconium rod is brought to the surface of the torch cone at a small distance equal to 0.15-0.25 the height of the working gap; arc discharge is fired and the porous copper filter is heated by electric current passing through the internal metal rod electrode, and intensive vaporization starts. Through the gap formed by the divergence angle of 5-15˚ between the conical surface of the porous copper filter and the torch body, vapor passes through the arc discharge and is ionized. The vapor flow is additionally spun in helical tangential grooves; it compresses and stabilizes the arc discharge, and owing to the dynamic outflow through the nozzle with an excess pressure the resulting plasma flow exits outside as a long needle-shaped flame.

A disadvantage of the prior art is the low energy efficiency due to ineffective process of decomposition of water into hydrogen and oxygen, which is caused by the device design neglecting physicochemical characteristics of the structure of water molecules.

The object of the present invention is to overcome the aforementioned disadvantages and to provide an effective method and device for decomposition of water in an electric field into oxygen and hydrogen, taking into account the physicochemical structure of water molecules.

The invention makes it possible to reduce the amount of energy consumed when breaking down water molecules in an electric field, optimize the processes for producing combustible gas, heat energy, hydrogen and oxygen, and increase the efficiency factor of the technical process for electrolytic decomposition of water.

The technical result is attained in a method for producing combustible gas, heat energy, hydrogen and oxygen by decomposition of water molecules in the gas-vapor phase in an electric field, wherein according to the invention the method further comprises first subjecting water in the liquid phase to a pulsed electric current discharge in a capacitor/reactor of a parametric electromagnetic field oscillator at parametric resonance stability frequencies that are multiples of the basic vibrational transition of hydrogen molecules, to provide formation of free molecules of water in the gas-vapor phase; and subjecting the resultant gas-vapor mixture to a pulsed electric field discharge in a capacitor/reactor of a second parametric electromagnetic field oscillator, electrically connected to the first parametric electromagnetic field oscillator, at parametric resonance stability frequencies that are multiples of the basic vibrational transition of the hydrogen molecules contained in the gas-vapor phase to produce a final product.

The final product in the form of combustible gas is fed to be used in any conventional way, e.g. as a fuel for an internal combustion engine.

The final product in the form of combustible gas is ignited at outlet of the capacitor/reactor of the second electromagnetic field parametric oscillator and used as a source of heat energy.

The final product in the form of combustible gas at outlet of the capacitor/reactor of the second electromagnetic field parametric oscillator is decomposed by any known method into hydrogen and oxygen, which are fed to storage for future use.

The technical result is also achieved in a device for producing combustible gas, heat energy, hydrogen and oxygen, comprising a dielectric housing, a nozzle/anode, an internal metal rod electrode with a tip cathode arranged coaxially with the nozzle/anode and adapted to move axially, a dielectric tube arranged coaxially with the electrode; a porous filter; a hole with a plug in the housing, said hole being connected with the porous filter; and a leading-in power cable, wherein according to the invention, a cylinder-conic insert is further mounted in the dielectric housing; one end of the internal metal rod electrode with the tip cathode is secured along the central axis of the insert at the base of the conical part made of dielectric material, to form together with the nozzle/anode a capacitor/reactor of parametric electromagnetic field oscillator for treating the gas-vapor phase of water; the rod electrode is mounted in the cylindrical metal part of the cylinder-conic insert/anode, to form a capacitor/reactor of a parametric electromagnetic field oscillator for treating water in the liquid phase; the second end of the rod electrode passes through an axial hole in a dielectric lid mounted on the cylindrical end of the metal part of the cylinder-conic insert to define a closed cavity, which is connected, through an outlet tube mounted with a gap coaxially with the dielectric tube, with the capacitor/reactor for treating water in the gas-vapor phase; the capacitor/reactor for treating water in the gas-vapor phase and the capacitor/reactor for treating water in the liquid phase are capable to form two connected oscillating electrical circuits that are electrically connected to an energy storage and a master oscillator of a pump unit.

The capacitor/reactor for treating water in the gas-vapor phase is spherical, and the capacitor/reactor for treating water in the liquid phase is coaxial, and they are operationally coupled to form a combustible gas generator.

The combustible gas generator comprises combustible gas ignition means mounted on the back lid of the dielectric housing.

The combustible gas ignition means comprises a screw handle, which is connected through a screw-nut gear with the internal metal rod electrode to provide its axial displacement and to ensure ignition of the electric arc.

The combustible gas generator may contain means for separating combustible gas into hydrogen and oxygen.

The capacitor/reactor of the electromagnetic field parametric oscillator for treating water in the liquid phase in a closed cavity comprises a porous filter from a heat-resistant cloth and a hole with a water inlet branch and a plug.

Section of the nozzle/anode is configured as a Laval nozzle.

A method according to the invention is based on the following. To date, the concept of water structure is associated with spatial positions of water molecules and relative positions of atoms of oxygen and hydrogen. According to Bjerrum model [8], a water molecule represents a tetrahedron with four point charges at its vertices, three nuclei in the molecule forming an equilateral triangle with the edge of 0.99 A. According to Samoilov [9], anomalies in water properties are associated with the structural features of water, including, first, the great openness of the structure, and second, that the near order in the arrangement of water molecules is stronger than the near order of other liquids, and that it is associated with the nature of hydrogen and Van der Waals bonds in the structure of water and aqueous solutions. X-ray diffraction analysis conducted by Kattsov [10], Morgan and Warren [11], and others showed that the radial distribution curve has two peaks, whose position is almost unchanged with increasing temperature. Special role in the movement of molecules in the water structure have voids. It is energetically easier to move using voids - there is no need for expenditures on formation of a vacancy. But the movement of molecules in such mechanisms cannot proceed without an exchange of neighboring molecules, i.e. without breakages of hydrogen bonds. This implies that some part of the hydrogen bonds will be always broken.

It is known [12] that liquid water is structurally a very sensitive system, because due to hydrogen bonds it has a great number of metastable states, each defined by a specific structure. Thus, for example, the presence of the ring associates with cyclic structures and minimum energy has been revealed in water [13, 14]. Moreover, such structures have been found to be relatively stable. The number of possible ways of connection of tetrahedral water molecules with each other and stable configurations of liquid crystals based on them is not limited. Such agglomerates, as $(H_{20})2$; $(H_20)4$; $(H_2O)20$; $(H_20)24$; aggregation of three octahedral structures, as well as such super molecules as $(H_20)57$ structure in the form of a tetrahedron dodecahedral (18), (19), and aggregation of 16 such structures into a single conglomerate $(H_20)912$, have been considered possible [22].

Thus, current scientific data on the structure of water suggests the possibility of effective impact on conglomerates of water molecules, for example, by resonant exposure to a low-frequency electromagnetic radiation in order to break them into separate components - oxygen and hydrogen. Like any movement at the molecular level, vibrations of molecules must be considered by quantum mechanics. However, some issues, in particular the frequency of vibrations of a molecule, can be solved by considering a molecule as a mechanical system, such as a system of spheres that modulate atoms, and connecting springs, symbolizing bonds between the atoms. Then the oscillations along the bond lines connecting two atoms can be described by Hooke's law, which allows the frequency of oscillations of the system be calculated:

$$\omega = \frac{1}{2\pi c}\sqrt{\frac{k}{m}}$$

where $\omega$ is the frequency of oscillations (more precisely, the wave number, which has the dimension $cm^{-1}$);
c is the speed of light;
k is the bonding force coefficient;
m is the reduced mass of the system, calculated by the formula

$$\frac{1}{m} = \frac{1}{m1} + \frac{1}{m2} + \frac{1}{m3} + \ldots$$

The force coefficient k increases with increase in the bonding strength between the atoms. Using this equation we can calculate the approximate oscillation frequency of the electromagnetic wave absorbed by any bond, determine the direction of change in the frequency with the change in the mass of atoms forming the bond, assess the impact of factors such as intermolecular interaction, hydrogen bond, etc. with increasing or decreasing the bond strength.

It is known [15] that large conglomerates have huge dipole moments, far exceeding the value of 1.87 Debye radius by 2.3-2.5 times, and long relaxation times at interaction with electromagnetic fields, which shifts natural resonances thereof to the low-frequency domain. Due to the fact that the energy of interaction between dipoles is proportional to $\mu^2$, where $\mu$ is the dipole moment, in accordance with the second law of thermodynamics a system of molecules tends to minimize the potential energy, and dipoles align unidirectionally in an ordered structure. The electric field of individual dipoles is vector added, and its intensity has been estimated increasing by not less than 20 times. Owing to oscillations of the dipoles, natural electromagnetic field is formed in the ordered structure, which confines this structure in quasi-equilibrium state indefinitely long. As a rule, such changes require significant energy expenditures. At the same time, changes in the structure of water, related with extremely low energy impact, have been noted [16]. These structural changes are also explained by the magnitude of bending of hydrogen bonds (change in the angle between the line connecting the centers of nearby water molecules, and the direction of the O-H bond of one of these molecules). The energy required for bending the hydrogen bonds is immeasurably less than the energy breaking them. In addition, the simultaneous deformation of the angle and length of the molecules bond is energetically more favorable, than the deformation of only the angle or only the bond length [17]. Thus, a change in the water structure is possible when the energy expenditure is much less than the energy of hydrogen bonds. There is evidence [18] that change in the structure of water can occur even in the absence of impact energy.

On the other hand, it is well known that the dependence of the dielectric constant on the oscillation frequency of the electromagnetic field $E(\omega) = E_1(\omega) + iE_2(\omega)$ is referred to as dielectric constant dispersion. In this case the dielectric constant $\varepsilon(\omega)$ is the complex magnitude: $\dot{\varepsilon}(\omega) = \varepsilon_0 + i\varepsilon_1$, and is defined by two quantities, $\varepsilon_0$ and $\varepsilon_1$, dependent on frequency $\omega$ of the alternating field. Since any alternating field can be represented as a set of fields changing according to the harmonic law, the dispersion absolute value and character are determined by the process of establishing the polarization in time, and under the influence of such a field the dielectric susceptibility and the polarization vector will also fluctuate harmonically with the same frequency $\omega$. When the period of electric field oscillations is large compared with the relaxation time t (frequency $\omega$ is small compared to 1/t), the polarization has time to follow the field, and the behavior of the dielectric susceptibility in the alternating electric field will not be substantially different from its behavior in a constant field (i.e. $\varepsilon_0 = \dot{\varepsilon}$, $\varepsilon_i = 0$). At frequencies $\omega \gg 1/t$ the dielectric susceptibility will not have time to polarize, i.e. the amplitude of polarization will be very small in comparison with the magnitude of polarization in a constant field. It means that $\varepsilon_0 \gg 1$, and $\varepsilon_1 \gg 0$. Thus, with increasing frequency $\varepsilon_0$ varies from $\varepsilon$ to 1. The sharpest change in $\varepsilon_1$ occurs just at frequencies of $\omega \sim 1/t$. At the same frequencies $\varepsilon_i$ passes through a maximum. This character of $\varepsilon(\omega)$ dispersion is referred to as relaxation.

For purposes of this invention the classic oscillatory system has been used, which has natural resonant frequencies. The mechanism of resonance resides in that the magnetic field of an inductance generates electric current, which charges a capacitor, while discharging the capacitor creates a magnetic field in the inductance, a process that is repeated many times, similar to a mechanical pendulum. Assuming that during the resonance the inductive and capacitive components of impedance are equal, the resonant frequency can be found from expression $\omega L = 1/\omega C$, where $\omega = 2\pi f$; f is the resonant frequency in hertz; L is the inductance in henries, and C is the capacitance of the capacitor in farad. In this case the capacitance of the capacitor is the function of dielectric constant of the medium (in our case, water), which is between plates of the capacitor C:

$$C = \frac{2\pi\varepsilon\varepsilon_0 l}{\ln \dfrac{R_2}{R_1}}$$

where 1 is the length of the capacitor, $R_2$ is the radius of the outer plate and $R_i$ is the radius of the inner plate of the capacitor.

It follows that such the oscillating system is a nonlinear parametric oscillation system. Parametric oscillations occur when one of the system parameters (coefficient of the differential equation of oscillations) periodically changes in a non-electric way.

The theory of the phenomena of excitation of oscillations in an electric oscillation system by periodic variation of its parameters is based on general Poincare methods [19]. The main conclusion of this theory reduces to the fact that the parametric resonance occurs at frequencies $\omega$ close to the values of $2\omega_0/n$ type, where n is any integer. However, the width of the resonance regions with increasing n quickly decreases as $h^n$, where h is the variable parameter of the system. In owr case, the variable parameter is the capacitance that is varied by changing the medium characteristics (dielectric constant) between the plates of capacitor C, and the system is a two-circuit oscillator, which contains two oscillatory circuits, natural frequencies of which are

$$\omega_{1,2} = 1/(\sqrt{L_{1,2}C_{1,2}})$$

The parametric resonance condition of the two-circuit system takes the form $\omega_3 = \omega_1 + \omega_2$. Oscillation at a single frequency of one of the circuits (to be specific, at frequency $\omega_1$) is a useful signal, the other one is referred to as idle. The two-circuit oscillator has several advantages compared with single-circuit oscillators, in particular, a higher stability of frequency; that is why its basic circuit has been chosen for the purposes of the present invention. In addition, in a special case, when frequencies $\omega_1$ and $\omega_2$ are multiples, it can be used as a frequency divider [20, 21].

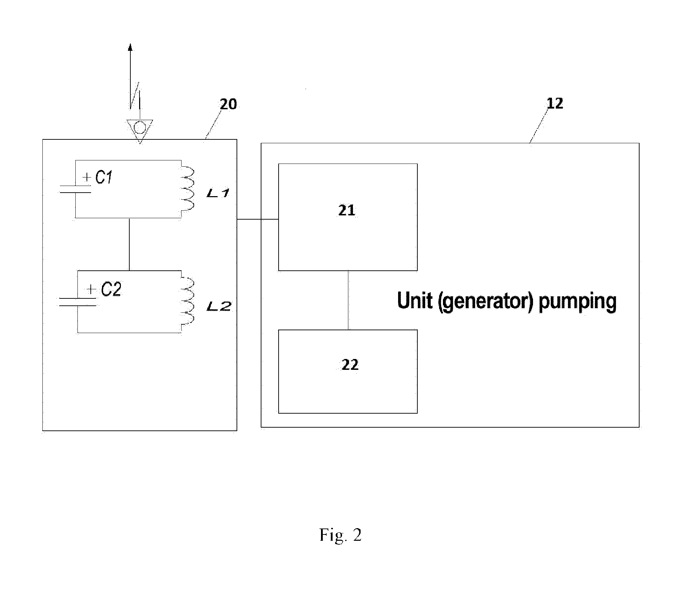

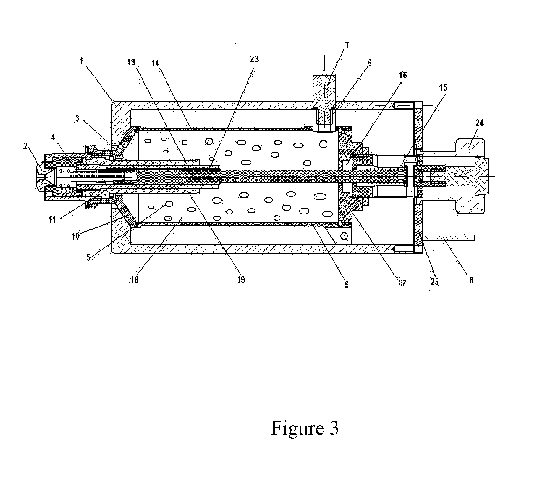

The invention is illustrated by the drawings presented in Figs. 1 to 5.

Fig. 1 shows an electrical equivalent of a parametric oscillation system for decomposition of water in an electric field.

Fig. 2 shows a principal schematic diagram of a device for decomposition of water.

Fig. 3 is a structural diagram of a device for decomposition of water in an electric field.

Fig. 4 shows frequency dependences of dielectric constant $\acute{\epsilon}$ and tangent of dielectric loss angle tg$\delta$ for water.

FIG. 5 shows the absorption spectrum of water vapor.

A device for implementing a method for decomposition of water in an electric field comprises a dielectric housing 1, a Laval nozzle (orificed anode) 2, an internal metal rod electrode 3 with a tip cathode 4, a dielectric tube 23, a porous filter 5, a hole 6 in the housing 1 with a plug 7, a leading-in power cable 8, a composite cylinder-conic insert 9; one end 11 of the internal metal rod electrode 3 with the tip cathode 4 is secured in the base of the conic part 10 made of a dielectric material to form together with the Laval nozzle 2 a spherical capacitor/reactor $C_2$ for treating the gas-vapor phase of water of a parametric electromagnetic field oscillator 12; a middle part 13 of the rod electrode 3, mounted in a cylindrical metal part 14 of the cylinder-conic insert (anode) 9, forms with it a coaxial capacitor/reactor $C_1$ for treating water in the liquid phase of the parametric electromagnetic field oscillator 12; a second end 15 of the rod electrode 3, passing through an axial opening 16 in the dielectric plug 17 mounted on a cylindrical end of the metal part 14 of the composite cylinder-conic insert 9; a closed cavity 18 with a porous filter 5 from a heat-resistant cloth; an outlet tube 19 coaxially mounted with a gap (not shown) relative to a dielectric tube 23 connecting the capacitor/reactor $C_2$ with the capacitor/reactor $C_1$. The spherical capacitor/reactor $C_2$ - coaxial capacitor/reactor $C_1$ system forms a combustible gas generator 20; the spherical capacitor/reactor $C_2$ with inductance $L_2$ and the coaxial capacitor/reactor $C_1$ with inductance $L_1$ are electrically connected to an energy storage 21 and a master oscillator 22 of a pump unit of the parametric electromagnetic field oscillator 12 and form a doubly connected parametric oscillation electric circuit ($L_1C_1$ - $L_2C_2$); an ignition means - a screw handle 24 on a back lid 25 of the insulating housing 1, which is connected through a screw-nut gear (not shown) to a second end 15 of the internal metal rod electrode 3; means 26 for separating the combustible gas into oxygen and hydrogen, for example, a molecular sieve.

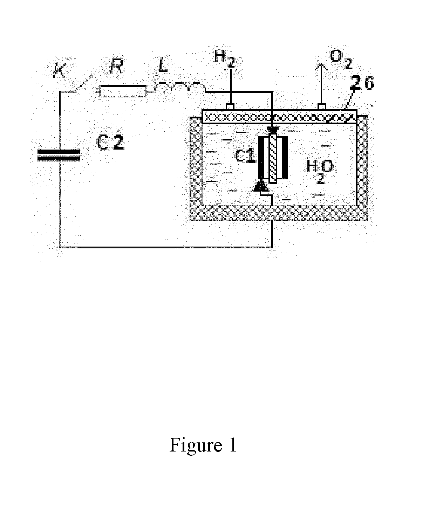

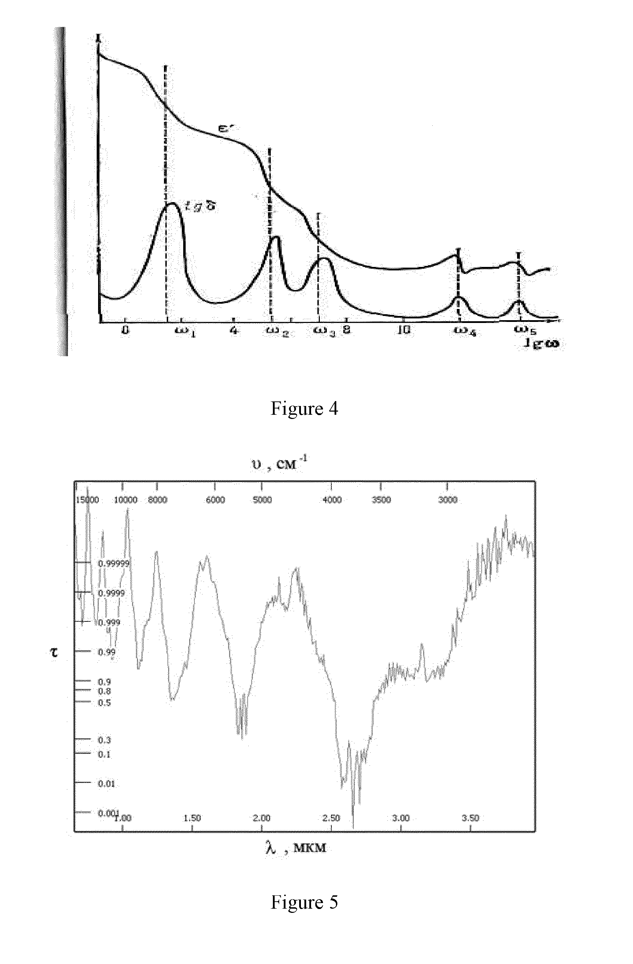

The method and device are implemented as follows. Through the hole 6 with a branch in the housing 1 water is filled into the cavity 18 to impregnate the porous filter 5 and the hole is closed with the plug 7, while the porous heat-resistant cloth evenly distributes the water in the space between the plates of the coaxial capacitor/reactor $C_1$. Water is supplied with an initial dielectric constant $\epsilon_1$ within 79 - 81. Then the parametric oscillator 12 is actuated and a pulsed periodic voltage is applied from the pump unit 22 through the energy storage 21 by the master oscillator 22 on the plates of the coaxial capacitor/reactor $C_1$; the voltage magnitude exceeds the threshold necessary to maintain the parametric generation process, and is 200 - 500V, depending on the composition of water. To suppress the classical Faraday's electrolysis process the plates of the coaxial capacitor/reactor $C_1$ are made of materials having the appropriate value of the electronegativity of the electrochemical series of metals: the cylindrical metal part 14 of the cylinder-conic insert (anode) 9 is made of Cr (electronegativity 1.56), and the middle part 13 (cathode) of the internal metal rod electrode 3 is made of W (electronegativity 1.40) or Mo (electronegativity 1.30). The total capacitance of the coaxial capacitor/reactor $C_1$ filled with water and the electric capacitance of the capacitor C (not shown) of the energy storage 21 should be sufficient for accumulation of energy exceeding the energy of intermolecular hydrogen bond of water cluster and range from 5 to 25 kJ/mol, depending on the composition of water. Frequencies $\omega_n$ of the master oscillator 22 of the pump unit 23 in each particular case are defined by the design of the coaxial capacitor/reactor $C_1$, inductances of the constituent elements, composition of water and are in the range of 500 Hz - 1200 Hz, 8 kHz - 20 kHz, 50 kHz - 75kHz, 120 kHz - 150 kHz. When DC voltage is applied at the parametric combustible gas generator 22, the capacitor C in the energy storage and the coaxial capacitor $C_1$ are charged. As a result, electric dipoles of $H_2O$ clusters (not shown) align along the force lines of the potential electrostatic field, which leads to the creation of induced anisotropy of the initial dielectric constant $\epsilon_1$. This process occurs over a time $t_1$ which depends on active R and reactive Z resistances of the input electrical circuit of the energy storage 21 and the parametric gas generator 20. In particular, the value of $t_1$ is determined by the total electric capacitance and inductance of the system and the charge current. The total electrical capacitance is charged up to the energy level sufficient to break down the intermolecular hydrogen bond. At time $t_2$ capacitors C discharge through the coaxial capacitor $C_1$ under water, which leads to release of the stored energy, emergence of local micro-arc underwater discharge and, eventually, to breakage of intermolecular hydrogen bonds with release of molecules of hydrogen, oxygen, and molecules of gases dissolved in water. The above process is then repeated with frequency $\omega_3$ (see Figs. 4, 5), falling in the region of the system parametric resonance stability, the time of discharge of 1 the coaxial capacitor/reactor $C_1$ being specified as $t_3 \ll \dfrac{1}{\varpi_T}$. As a result, intense evaporation and partial decomposition of water with evolution of hydrogen, oxygen, and certain amounts of other gases dissolved in water take place in the capacitor/reactor $C_1$. The formed vapor-gas mixture moves, under pressure, from the coaxial capacitor/reactor $C_1$ through the outlet tube 19 into the spherical capacitor/reactor $C_2$, where is subjected to a pulsed periodic voltage applied from the plates of the capacitor $C_2$ (formed by Laval nozzle 2, anode, and spherical tip head 4, cathode), the voltage value exceeding the threshold required for maintaining the parametric generation process in the presence of the vapor phase of water. Natural frequencies of the connected parametric capacitors are set multiple of the main oscillation frequencies of water molecules in the liquid and vapor phases, respectively. At the exit of the Laval nozzle 2 the resultant combustible gas enters a means 26 for the separation into oxygen and hydrogen (molecular sieve, conventionally shown in Fig.1), and the final products are then fed to a storage (not shown) for subsequent use.

When the resultant combustible gas is used as a fuel, it is delivered, without prior separation into oxygen and hydrogen, into a storage for later use, or fed, for example, into an internal combustion engine (not shown).

To produce heat energy, combustible gas at exit of the Laval nozzle 2 is ignited by an electric discharge to form a needle-shaped plasma torch with a temperature of 6000 - 8000˚C, which is used as a heat source. To do this, by rotation of the screw handle of the ignition means 24, located on the rear lid 25 of the dielectric housing 1, the spherical cathode tip 4 is put close to the Laval nozzle 2 (anode) and, without entering into direct contact, a "breakdown" passage of the electric current is provided between plates of the spherical capacitor/reactor $C_2$ (anode and cathode). The distance between the spherical cathode tip 4 and the Laval nozzle 2 is adjusted by displacement in the longitudinal axial direction of the internal metal rod electrode 3, which is connected by its second end 15 passing through an axial opening 16 in the dielectric lid 17 through screw-nut gear to the screw handle of the ignition means 24. When capacitor C of the energy storage 21 discharges through the capacitor/reactor $C_2$, a pulsed periodic arc discharge occurs in the vapor-water gas. This leads to a great heat release and ignition of hydrogen in oxygen environment. In addition, the temperature dependence of the dielectric constant, determined by the temperature coefficient

$$T_{k\varepsilon} = \frac{1}{\varepsilon} \frac{d\varepsilon}{dT}$$

makes an appropriate contribution to the change of natural frequencies of the parametric oscillatory circuit $L_2C_2$. The capacitance of the capacitor $C_2$ with dielectric and the accumulated electric charge in it are defined by the sum of different mechanisms of polarization. Therefore, the dependence of capacitance on temperature has the most diverse character depending on the polarization mechanism of dielectrics. With increasing the temperature in the capacitor/reactor $C_2$, pressure grows as well. Influence of pressure P on dielectric constant $\varepsilon$ is taken into account by the pressure coefficient of the dielectric constant:

$$P_{k\varepsilon} = \frac{1}{\varepsilon} \frac{d\varepsilon}{dP}$$

For water vapor, the pressure coefficient is generally positive, as under uniform compression the number of molecules that can be polarized in a unit volume increases. Therefore, maximum is observed in the dielectric constant dependence on the pressure. The dependence of the dielectric constant on temperature and pressure lead to an additional non-linear change in the electrical capacitance, which gives rise to a shift in natural frequencies to the low frequency domain. That is, the dielectric constant $\varepsilon$ is a complex non-linear function of three variables: electromagnetic field frequency $\omega$, temperature T and pressure P:

$$\varepsilon = f(\omega, T, P)$$

Thermal dissociation of water vapor into hydrogen and oxygen begins at the temperature of 1500 K and is 1.8% at the temperature of 2300 K. The bulk of the water vapor dissociates at the temperature of 4000 K. Further increase in temperature promotes ionization and combustion of hydrogen with release of considerable heat. Table 1 shows the average composition of the combustible gas released at decomposition of portable tap water.

Table 1

| Hydrogen | 46.483% |
|---|---|
| Carbon dioxide | 9.329 |
| Ethylene | 0.034 |
| Ethane | 0.005 |
| Acetylene | 0.616 |
| Oxygen | 1.164 |
| Nitrogen | 3.818 |
| Methane | 0.181 |
| Carbon monoxide | 38.370 |
| Total amount | 100 |

When distilled water is used, the released combustible gas is free from impurities and is composed primarily of molecules of hydrogen and oxygen. Combustion of hydrogen releases the heat of 120 000 kJ/kg (compared to 45000 kJ/kg released in combustion of natural gas), this reducing 2-2.5 times the expenses for the production of heat energy as compared with conventional fuels. In addition, operation of the device in the parametric resonance conditions significantly reduces electricity costs for conducting the process of decomposition of water into hydrogen and oxygen, compared with the most relevant prior art and the conventional electrolysis (Cos φ of the double inductive-capacitive system of resonant circuits of the reactors is close to unity). Water vapor formed in combustion should also be considered as a useful product - it humidifies air (air in modern apartments with central heating is known to be too dry) and is an additional source of heat, which enhances the efficiency of the method and device in general.

The device for implementing the invention can be made in various versions, and the method will find wide application in small stationary and mobile power systems, especially in power supply of remote settlements, cottage villages, industrial sites, farms, livestock and greenhouses, as well as provide a wide range of consumers with effective, many times cheaper, cleaner and safer fuel.

References cited:

1. GB 1489054 A, 1977.
2. GB 1585527 A, 1981.
3. US 4936961 C1, 1990.
4. RU 2142905 C1, 1999 (most relevant prior art).
5. RU 2112635 C1, 1998.
6. RU 2111098 C1, 1998.
7. RU 2066263 C1, 1996 (most relevant prior art).
8. Bjerrum N., Structure and Prop. of Ice. Science. Vol.115, No.11, 1952.
9. Samoilov O.Y. Structure of Aqueous Electrolyte Solutions and Hydration of Ions. - M.: USSR Academy of Sciences, 1957.
10. Katzoff S.J. Chem.Phis. Vol.2, 1934. p.841.
11. Morgan J., Warren B.E. J.Chem.Phis., Vol.6, 1938. p.666.
12. J. Schulte, "Wasser-Claster - Struktur und Information", Acta Medica Empirica, 39(7), 418-423, (1990).
13. K. Liu, M.G. Bown, et al., "Characterization of a cage form of the water hexamer", Nature, 381, 501-503 (1996).
14. K. Liu, J.D. Cruzan, and R.J. Saycally, "Water Clusters", Science, 271, 929-933 (1996).
15. Scott V.W. J.Chem. Phys. v.94 3 (1991) p. 1859, Havthorne G. J.Chem. Phys. No.108, 12, (1998), p. 4693.
16. J. Bonveniste, et al., "Human basophil degranulation triggered by very dilute antiserum against IgE", Nature, 333 (June 30), 816-818 (1988).
17. Zatsepina N.G. Structure and Properties of Water, Publications of Moscow State University, 1994.
18. Stepanov A.M., Mozhaisky A.M., Alyushin M.T., "Studies of the dynamics of changes of state of water and aqueous solutions at the information perturbations", Actual problems of pharmaceutical chemistry. Proceedings of Institute of Pharmacy, V.XXXV, Moscow, 1996, pp.232-235.
19. L.I. Mandelstam and J.D. Papaleksi, Parametric Excitation of Electrical Oscillations, 1934, Journal of Technical Physics, Volume IV, Issue 1.
20. Akhmanov S.A., Khokhlov R.V., Parametric Amplifiers and Light Generators, "Advances in Physical Science", 1966, Vol. 88, issue 3, p.439.
21. Yariv A., Quantum Electronics and Nonlinear Optics, Moscow, 1973.
22. Bul'enkov N.A. "Self-organizing triplet structures of ideal fractals of bound water with D3 and T symmetry", Crystallography, 35 (1), 147-154 (1990).

**Claims**

1. A method for producing combustible gas, heat energy, hydrogen and oxygen by decomposition of water molecules in the gas-vapor phase in an electric field, **characterized in that** the method comprises first subjecting water in the liquid phase to a pulsed electric current discharge in a capacitor/reactor of a parametric electromagnetic field oscillator at parametric resonance stability frequencies that are multiples of the basic vibrational transition of hydrogen molecules to provide formation of free water molecules in the gas-vapor phase; and subjecting the resultant gas-vapor mixture to a pulsed electromagnetic field discharge in a capacitor/reactor of a second parametric electromagnetic field oscillator, electrically connected to the first parametric electromagnetic field oscillator, at parametric resonance stability frequencies that are multiples of the basic vibrational transition of hydrogen molecules contained in the gas vapor phase to produce a final product.

2. The method according to claim 1, **characterized in that** the final product in the form of combustible gas is fed to subsequent use in any conventional way, e.g. as a fuel for an internal combustion engine.

3. The method according to claim 1, **characterized in that** the final product in the form of combustible gas is ignited at outlet of the capacitor/reactor of the second parametric electromagnetic field oscillator and used as a source of heat energy.

4. The method according to claim 1, **characterized in that** the final product in the form of combustible gas at outlet of the capacitor/reactor of the second parametric electromagnetic field oscillator is separated by any conventional method into hydrogen and oxygen, which are delivered to a storage for later use.

5. A device for producing combustible gas, heat energy, hydrogen and oxygen, comprising a dielectric housing, a nozzle/anode, an internal metal rod electrode with a cathode tip arranged in the housing coaxially with the nozzle/anode and adapted to move axially, a dielectric tube arranged coaxially with the electrode, a porous filter, a hole with a plug in the housing, said hole being connected with the porous filter, and a leading-in power cable, said device **characterized in that** a composite cylinder-conic insert is further mounted in the dielectric housing; one end of the internal metal rod electrode with a cathode tip is secured along the central axis of the insert at the base of the conical part made of a dielectric material to form together with the nozzle/anode a capacitor/reactor of a parametric electromagnetic field oscillator for treating water in the gas-vapor phase; the rod electrode is mounted in the cylindrical metal part of the cylinder-conic insert/anode to form a capacitor/reactor of a parametric electromagnetic field oscillator for treating water in the liquid phase, the second end of the rod electrode passes through an axial hole in a dielectric lid mounted on the cylindrical end of the metal part of the cylinder-conic insert to form a closed cavity, which communicates, through an outlet tube mounted with a gap coaxially with the dielectric tube, with the capacitor/reactor for treating water in the gas-vapor phase; and the capacitor/reactor for treating water in the gas-vapor phase and the capacitor/reactor for treating water in the liquid phase are adapted to form two connected oscillating electrical circuits that are electrically connected to an energy storage and a master oscillator of a pump unit.

6. The device according to claim 5, **characterized in that** the capacitor/reactor for treating water in the gas-vapor phase is spherical, and the capacitor/reactor for treating water in the liquid phase is coaxial, both of them being operationally coupled to form a combustible gas generator.

7. The device according to any one of claim 5 and 6, **characterized in that** the combustible gas generator comprises combustible gas ignition means, which is mounted on the back lid of the dielectric housing.

8. The device according to any one of claims 5, 6 and 7, **characterized in that** said combustible gas ignition means is a screw handle, which is connected through a screw-nut gear to the internal metal rod electrode to axially displace the latter and to ignite electric arc.

9. The device according to any one of claims 5 and 6, **characterized in that** said combustible gas generator comprises means for separating the combustible gas into hydrogen and oxygen.

10. The device according to claim 5, **characterized in that** the capacitor/reactor of the parametric electromagnetic field oscillator for treating water in the liquid phase in a closed cavity comprises a porous filter made from a heat-resistant cloth and a hole with a branch pipe and a plug to input water therein.

11. The device according to claim 5, **characterized in that** the section of the nozzle/anode is configured as a Laval nozzle.

Figure 1

Fig. 2

Figure 3

EP 2 433 902 A1

Figure 4

Figure 5

<table>
<tr><td colspan="2">**INTERNATIONAL SEARCH REPORT**</td><td colspan="2">International application No.<br>PCT/BY 2010/000004</td></tr>
</table>

A.   CLASSIFICATION OF SUBJECT MATTER

C01B 3/02 (2006.01); C01B 13/02 (2006.01)

According to International Patent Classification (IPC) or to both national classification and IPC

B.   FIELDS SEARCHED

Minimum documentation searched (classification system followed by classification symbols)

C01B 3/00, 3/02, 3/04, 3/06, 13/00, 13/02, C25B 1/00, 1/02, 1/04, 9/00, H01G 5/00

Documentation searched other than minimum documentation to the extent that such documents are included in the fields searched

Electronic data base consulted during the international search (name of data base and, where practicable, search terms used)

Esp@senet, USPTO DB, PAJ

C.   DOCUMENTS CONSIDERED TO BE RELEVANT

| Category* | Citation of document, with indication, where appropriate, of the relevant passages | Relevant to claim No. |
|---|---|---|
| A | RU 2142905 C1 (ERMAKOV VIKTOR GRIGORIEVICH) 20.12.1999, the abstract, p. 4, line 25-p. 6, line 39, drawing 1, 2, 3 | 1-11 |
| A | RU 2177512 C1 (KUBANSKY GOSUDARSTVENNY AGRARNY UNIVERSITET) 27.12.2001, the abstract, p. 3, line 20-p. 4, line 37 | 1-11 |
| A | GB 1139614 A (ALLIS-CHALMERS MANUFACTURING COMPANY) 08.01.1969, p. 1, lines 11-15, p. 2, line 51-p. 3, line 93, drawing | 1-11 |

☐   Further documents are listed in the continuation of Box C.         ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 September 2010 (23.09.2010) | 14 October 2010 (14.10.2010) |

| Name and mailing address of the ISA/ | Authorized officer |
|---|---|
| RU | |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1489054 A
- GB 1585527 A
- US 4936961 C1
- RU 2142905 C1
- RU 2112635 C1
- RU 2111098 C1
- RU 2066263 C1

### Non-patent literature cited in the description

- **Bjerrum N.** Structure and Prop. of Ice. *Science,* 1952, vol. 115 (11
- **Samoilov O.Y.** Structure of Aqueous Electrolyte Solutions and Hydration of Ions. *M.: USSR Academy of Sciences,* 1957
- **Katzoff S.J.** *Chem.Phis.,* 1934, vol. 2, 841
- **Morgan J. ; Warren B.E.** *J.Chem.Phis.,* 1938, vol. 6, 666
- **J. Schulte.** Wasser-Claster - Struktur und Information. *Acta Medica Empirica,* 1990, vol. 39 (7), 418-423
- **K. Liu ; M.G. Bown et al.** Characterization of a cage form of the water hexamer. *Nature,* 1996, vol. 381, 501-503
- **K. Liu ; J.D. Cruzan ; R.J. Saycally.** Water Clusters. *Science,* 1996, vol. 271, 929-933
- **Scott V.W.** *J.Chem. Phys.,* 1991, vol. 94 3, 1859
- **Havthorne G.** *J.Chem. Phys.,* 1998, vol. 108 (12), 4693
- **J. Bonveniste et al.** Human basophil degranulation triggered by very dilute antiserum against IgE. *Nature,* 30 June 1988, vol. 333, 816-818
- **Zatsepina N.G.** *Structure and Properties of Water,* 1994
- **Stepanov A.M. ; Mozhaisky A.M. ; Alyushin M.T.** Studies of the dynamics of changes of state of water and aqueous solutions at the information perturbations. *Actual problems of pharmaceutical chemistry. Proceedings of Institute of Pharmacy,* 1996, vol. XXXV, 232-235
- **L.I. Mandelstam ; J.D. Papaleksi.** Parametric Excitation of Electrical Oscillations. *Journal of Technical Physics,* 1934, vol. IV (1
- **Akhmanov S.A. ; Khokhlov R.V.** Parametric Amplifiers and Light Generators. *Advances in Physical Science,* 1966, vol. 88 (3), 439
- **Yariv A.** *Quantum Electronics and Nonlinear Optics,* 1973
- **Bul'enkov N.A.** Self-organizing triplet structures of ideal fractals of bound water with D3 and T symmetry. *Crystallography,* 1990, vol. 35 (1), 147-154